# EUROPEAN PATENT APPLICATION

(11) **EP 4 468 462 A1**
(43) Date of publication of application: **27.11.2024**
(21) Application number: 24177676.4
(22) Date of filing: 23.05.2024
(51) Int. Cl.: H01M 10/6554, H01M 10/6561, H01M 10/6566, H01M 50/296, H01M 50/562

(54) **VEHICLE BATTERY PACK CONTAINING BORON NITRIDE AND RELATIVE VEHICLE**

(30) Priority: 25.05.2023 IT 202300010557
(71) Applicant: FERRARI S.p.A., 41100 Modena (IT)
(72) Inventor: BALLARIN, Marco, 41100 MODENA (IT); LIGABUE, Elena, 41100 MODENA (IT)
(74) Representative: Studio Torta S.p.A.

(57) **Abstract**

A vehicle battery pack (1) comprising one or more electrochemical cells (5), each provided with two electrical terminals (9). The battery pack (1) comprises a coating layer (17), which is at least partially arranged in a coated area (20) of at least part of at least one of the two electrical terminals (9); the coating layer (17) comprises boron nitride.

## Description

### CROSS-REFERENCE TO RELATED APPLICATIONS

This patent application claims priority from Italian patent application no. 102023000010557 filed on May 25, 2023, the entire disclosure of which is incorporated herein by reference.

### TECHNICAL FIELD

The invention relates to power storage systems for the automotive industry and, in particular, it relates to a vehicle battery pack containing boron nitride and to a relative vehicle.

### PRIOR ART

Lithium batteries, thanks to their high energy density, allow electric drive systems to be more and more implemented in the automotive industry. Lithium polymers, in particular, currently represent, from a chemical point of view, the state of the art in the production of high-capacity batteries.

Generally speaking, a known power storage system for an electric or hybrid vehicle comprises a battery pack consisting of a plurality of battery modules electrically connected to one another. Each battery module comprises, in turn, a plurality of electrochemical cells, which are electrically connected to one another in series and/or in parallel to achieve the desired total voltage and energy density.

The battery modules currently available in the market (not only in the automotive industry) often comprise planar pouch electrochemical cells, which have a much more limited thickness compared to the other dimensions. Planar cells have two main faces, which are opposite one another and very large, and four oblong narrow sides, wherein the positive and negative terminal poles of the cell are arranged on one side or on two opposite sides.

In detail, planar pouch electrochemical cells are usually arranged parallel to one another and a dissipator element is often inserted between two adjacent cells, parallel to the main faces of the cells. Furthermore, *busbars* are usually used to create electrical connections in the battery pack, namely metal bars often used as wiring between a terminal of the cells and a terminal of the battery pack.

Lithium-ion batteries are known to be very sensitive to temperature. It is also known that the production of energy from an electrochemical process inevitably causes the temperature of the cell to rise and that too high temperatures can adversely affect the behaviour and degradation of the cells to a significant extent. In fact, electrochemical cells begin to degrade rapidly when overheated, with a consequent impact on the performance and safety of the battery pack. In these cases, in addition to malfunction and breakage, there is also the risk of uncontrolled thermal events (thermal runway).

It is therefore important, for an optimal operation of the cell, to ensure adequate heat dissipation inside the battery pack.

However, heat dissipation in batteries is problematic for several reasons.

First of all, the areas with the highest temperature often coincide with the areas of accumulation of electrostatic or electrical charges. This is the case, for example, of the corners and edges of the surfaces of the planar pouch cell or of the electrical terminals of the cells.

These electrically charged areas must be electrically insulated to avoid an unwanted flow of current in areas of the battery where it should not take place.

However, the materials normally used for the electrical insulation of the conductive parts generally are aerial or plastic means, namely insulators also from a thermal point of view, which means that they do not facilitate the dissipation of heat.

Therefore, the use of coatings, such as electrically insulated films or covers, means that hot spots, namely heat accumulation points, are created on the metal elements (for example, cells, trays and *busbars*)*,* in the area of corners and edges thereof.

Solutions are known, which involve the use of cooling systems in order to solve the problem of heat dissipation and, hence, ensure efficiency, safety and life of the battery pack.

The most commonly used systems are forced air ventilation cooling and liquid cooling.

Forced ventilation cooling systems allow air inside the battery pack to be exchanged with air on the outside thereof. In general, air is pushed into the battery pack through a motor fan, which sucks the air inside the vehicle, and through a series of channels, which then convey the air through the battery modules, up to the final outlet on the of the outside the passenger compartment.

For liquid cooling, a cooling fluid circulation system is arranged inside ducts bordering the battery cells. Then, heat is transported from the cells to the areas where the cooling fluid flows.

Document US5441825 discloses a device for compressing cells arranged inside the casing of a battery and for providing a gas-tight and electrically insulated seal for one of the terminals of the battery.

Document US2019181400 discloses a battery pack comprising a plurality of cylindrical cells, a battery holder made of polymerizable resin, into which the axial ends of the cylindrical batteries are inserted, a pair of terminal plates fixed on the battery holder so as to be in close contact with the battery holder and connect the cylindrical batteries in parallel.

Document FR2527840 discloses a terminal for an electrochemical storage cell, which provides a low-resistance connection to the conductive elements contained therein, while insulating the terminal from the highly corrosive environment inside the cell.

Document US4381597 discloses a gasket for molten-salt batteries with a current conducting rod partially inside the battery and partially on the outside thereof, which comprises a layer of compressible material on the body of the current conducting rod.

Document DE102016207446 discloses a high-voltage battery module containing several cells, several cooling fins mounted between the cells and a frame supporting the battery cells and the cooling fins.

However, the methods discussed above do not offer an exhaustive solution to the problem of heat dissipation.

For example, liquid cooling, which usually is the most performing solution capable of ensuring the stability of the thermal conditioning of the battery, is, however, a relatively complex, heavy and especially cumbersome system (parameters that are particularly important in the case of high-performance vehicles). In addition, additional elements are usually used in order to conduct heat from the cells to the areas where the fluid flows, thus making dissipation uneven and partially ineffective.

Known methods are affected by further problems. As already mentioned above, the metal components from which the heat must be dissipated are often coated with electrically insulating coating materials (to avoid the passage of electrical charges), which also are thermally insulating. The presence of these coatings worsens the exchange of heat with the cooling system. Therefore, in any case, dissipation efficiency always is relatively low.

Furthermore, none of the methods discussed above can effectively collect heat and, therefore, cool the electrical terminals of the cells, which are one of the most critical hot spots of the battery pack (due to the large amount of current that flows through them and to their narrow and oblong section).

Owing to the above, the cooling of the cells needs to be improved, thus reducing heat peaks in the vehicular battery packs.

### DESCRIPTION OF THE INVENTION

The object of the invention is to provide a vehicle battery pack containing boron nitride and a relative vehicle, which are at least partially free from the drawbacks described above and, at the same time, are simple and economic to be manufactured.

According to the invention, there are provided a vehicle battery pack containing boron nitride and a relative vehicle as claimed in the independent claims attached hereto and, preferably, in any one of the dependent claims directly or indirectly depending on the independent claims.

The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figure 1 is a schematic exploded view of a vehicle battery pack according to the invention;
- figure 2 is a schematic exploded view of two adjacent layers of planar electrochemical cells comprised in the battery pack of figure 1;
- figure 3 is a schematic perspective view of a planar electrochemical cell of the battery pack of figures 1 and 2; and
- figures 4 and 5 are schematic perspective views of a detail of a connection between electrical terminals of two planar electrochemical cells.

### PREFERRED EMBODIMENTS OF THE INVENTION

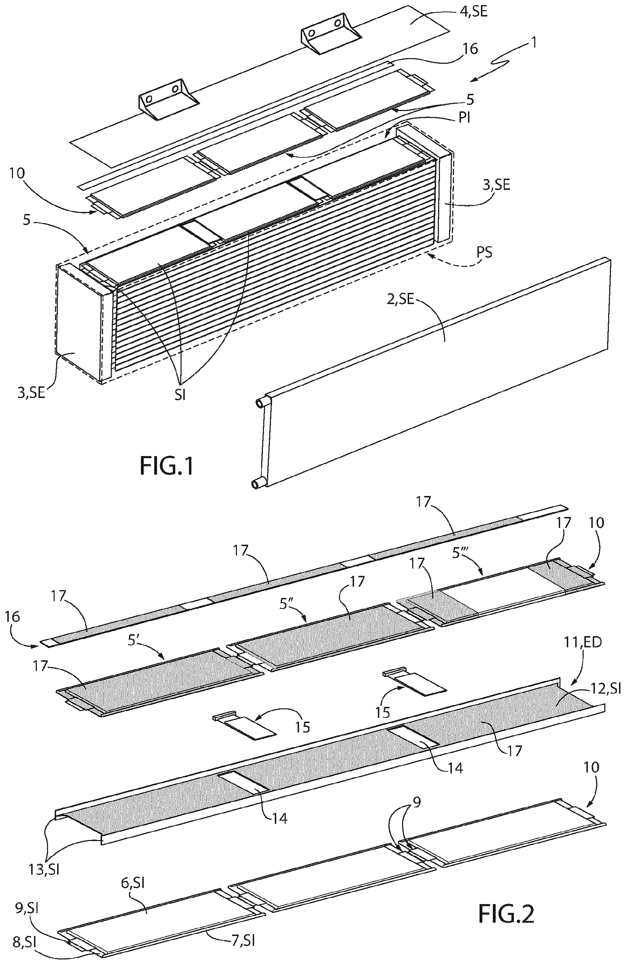

In figure 1, reference number 1 indicates, as a whole, a vehicle battery pack. The battery pack 1 is provided with an outer structure SE, which delimits an inner portion PI of the battery pack 1. The inner portion PI comprises, in turn, one or more inner surfaces SI. In other words, the battery pack 1 is delimited by an outer casing (namely, the outer structure SE), which delimits the inside of the battery pack 1, which, in turn, is provided with a plurality of inner surfaces SI.

The battery pack 1 further comprises a coating layer 17, which is at least partially arranged in the area of at least part of at least one inner surface. The coating layer 17 comprises boron nitride (namely, the binary compound BN formed by boron and nitrogen in the same proportions), which makes it electrically insulating and thermally conductive. In other words, the coating layer 17 is configured to electrically insulate the surfaces on which it is arranged, forbidding the passage of charges between conductive elements of the battery pack, while allowing for the passage of heat.

In particular, the coating layer 17 comprises the allotrope of boron nitride similar to graphite, namely polymorphous boron nitride, also known as hexagonal boron nitride, as it consists of substantially two-dimensional sheets (in registry) held together, like graphite (which, however, is a semimetal that conducts electricity). Therefore, more in particular, the coating layer 17 makes it possible to electrically insulate while dissipating heat; in particular, by exploiting the fact that boron nitride is a two-dimensional material, the inner volumes of the battery pack are not increased; in fact, the dimensions of the currently used insulators are reduced.

In particular, the coating layer 17 comprises an innovative two-dimensional material, which comprises, in turn, no more than ten atomic layers of two-dimensional crystals of an element or compound (in this case of boron nitride), in compliance with standard ISO/TS 80004-13:2017.

Thanks to the presence of boron nitride, the coating layer 17 hence has insulating and thermal properties that are particularly advantageous for the battery pack 1.

In particular, the coating 17 configured to have a dielectric strength of 2.5 kV or more, in particular 5 kV, and a thermal conductivity of 400 W/mK or more, in particular 750 W/mK.

In the preferred embodiment of the invention, the dielectric strength of the coating layer 17 is greater than 5 kV; the thermal conductivity of the coating layer 17 is 750 W/mK.

In the non-limiting embodiment shown in figure 1, the battery pack 1 has an oblong, substantially parallelepiped-like shape. In other non-limiting embodiments which are not shown herein, the battery pack 1 has a shape other than that of a parallelepiped, but which nevertheless defines a housing for electrochemical cells; for example, the battery pack 1 has the shape of at least part of the floorbaord of a road vehicle.

In particular, as shown in figure 1, the outer structure SE comprises two parallel side walls 2 facing one another, two parallel base walls 3 facing one another and two lids 4.

The outer structure SE defines a box-shaped portion PS, which delimits the inner portion PI comprising, on the inside, one or more electrochemical cells 5.

In the embodiments shown in the accompanying figures, the electrochemical cells 5 of the battery pack 1 are planar cells. The cells 5 preferably are planar pouch cells. This disclosure can however also be applied without limits (by adapting geometries) to cylindrical cells or to other types of planar cells.

In particular, the cells 5 comprise at least one inner surface SI, in the area of which the coating layer 17 is arranged.

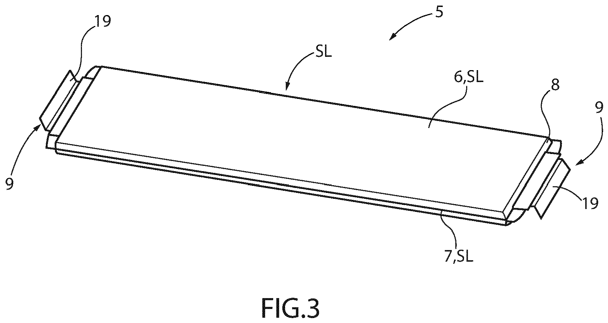

As shown in the non-limiting embodiment of figure 3, the electrochemical cell 5 is provided with a side surface SL, which comprises two main faces 6 and two secondary faces 7 respectively opposite one another.

In the non-limiting embodiment of figure 3, the cell 5 comprises two base surfaces 8 arranged on opposite (smaller) sides of the side surface SL and two electrical terminals 9 projecting from each base surface 8.

In other non-limiting embodiments which are not shown herein, the terminals 9 of the cell 5 project from only one of the base surfaces 8.

Advantageously, though not in a limiting manner, the main faces 6 and the secondary faces 7 of the cell 5 are inner surfaces SI, on which the coating layer 17 is at least partially, preferably totally, arranged.

As shown in the non-limiting embodiment of figure 2, the coating layer 17 wraps, in particular completely, the side surface of the cell 5". In particular, the layer 17 covers the main faces 6 and the secondary faces 7 of the cell 5".

Advantageously, though not in a limiting manner, the main faces 6, the secondary faces 7 and the base surfaces 8 of the cell 5 are inner surfaces SI, on which the coating layer 17 is at least partially, preferably totally, arranged.

As shown in the non-limiting embodiment of figure 2, the cell 5' is completely wrapped by the coating layer 17. In other words, the coating layer 17 covers the main faces 6, the secondary faces 7 and the base surfaces 8 of the cell 5' .

In other non-limiting embodiments, the main faces 6, the secondary faces 7 and the base surfaces 8 of the cell 5 are inner surfaces, on which the coating layer 17 is only partially arranged.

In particular, as shown in figure 2, the cell 5‴ is covered by the coating layer 17 in the base surface 8 and in a limited portion of the side surface SL; in particular, the limited portion is located near the terminal 9.

In other non-limiting embodiments which are not shown herein, the cells 5', 5" and 5‴ are completely wrapped by the coating layer 17. Or all three cells 5', 5" and 5‴ only have some coated areas (the same or different).

Advantageously, though not necessarily, all the cells 5 comprised in the inner portion PI of the battery pack 1 are at least partially, preferably totally, coated with the coating layer 17.

In further non-limiting cases, the coating layer can also wrap the sole side surface SL, substantially replacing the (electrically and thermally) insulating polymer around which the cells 5 are conventionally wrapped to avoid the diffusion of electrostatic charges that are usually located on said surface.

Advantageously, though not in a limiting manner, and as shown in figures 1 and 2, the cells 5 are arranged parallel to one another inside the inner portion PI of the battery pack 1. In detail, the cells 5 are parallel to the lids 4 of the battery pack 1.

According to some preferred embodiments, like the one shown in figure 2, the inner portion PI further comprises a plurality of dissipator elements ED arranged between adjacent planar electrochemical cells 5 (in particular, between two parallel rows of adjacent planar electrochemical cells 5).

In particular, the dissipator elements ED comprise at least one inner surface SI, in the area of which the coating layer 17 is arranged. Preferably, though not necessarily, the coating layer 17 totally covers the dissipator elements ED. In this way, heat dissipation inside the battery pack is further improved.

In the non-limiting embodiment shown in figure 2, the dissipator elements ED are trays 11 made of a metal material, preferably aluminium. The trays 11 are at least partially (preferably totally) coated with the coating layer 17.

The electrochemical cells 5 are preferably grouped in layers 10. Each layer 10 comprises, in the embodiments shown herein, three electrochemical cells 5 connected in series to one another through the respective electrical terminals 9. In the other embodiments which are nor shown herein, each layer 10 comprises two or more than three cells 5, if necessary arranged differently relative to one another (for example, with a T-shaped, an L-shaped, a cross-like, a parallel arrangement, ...).

In particular, the layers 10 overlap one another and are arranged parallel to one another; furthermore, the layers 10 are preferably arranged parallel to the lids 4 of the battery pack. As mentioned above, the layers 10 are housed (included) inside the inner portion PI.

Preferably, the layers 10 making up the battery pack 1 can create one single series connection or can be connected so as to create two or more parallel connections of series connections, based on the voltage and current value required by the battery pack 1.

In the non-limiting embodiment of figure 2, two parallel and adjacent layers 10 of adjacent parallel cells 5 are shown. The tray 11 is arranged between the two layers 10. In particular, the tray 11 has an essentially planar shape and comprises a main plate 12 parallel to the main faces 6 of the cells 5 and projecting portions 13 on opposite sides of the main plate 12, in detail on opposite sides where there are not the terminals 9 of the cells 5 (namely, of the cells 5', 5" and 5‴).

Advantageously, though not in a limiting manner, the projecting portions 13 comprise a surface perpendicular to the main plate 12. In other words, the cross section of the tray 11 is H-shaped.

As mentioned above, the tray 11 arranged between two adjacent layers 10 of cells 5 is partially coated with the coating layer 17; in particular, the tray 11 is coated with the layer 17 in the area of the main plate 12. The projecting portions 13 preferably are uncoated.

In other non-limiting embodiments which are not shown herein, the coating layer 17 totally wraps the tray 11. In other words, the coating layer 17 covers the main plate 12 and the projecting portions 13 of the tray 11.

In the non-limiting embodiment of figure 2, each tray 11 comprises two rectangular seats 14, in each of which an insulating material support 15 is engaged. The support 15 comprises a first metal material band properly insulated from the tray 11, so that, in operating conditions, the terminal 9 of at least one cell 5 is welded to said metal material band, so that the cell 5 is fixed to the relative tray 11 by means of the relative support 15.

In the non-limiting embodiments shown in figures 1 and 2, the tray 11 dissipates the heat produced by the electrochemical cells 5. To this aim, the projecting portions 13 are configured to transfer the heat taken from the cell 5, through the main plate 12, to the side walls 2 of the battery pack.

Preferably, inside at least one side wall 2 there is a channeling circuit, in which a cooling fluid flows; in particular, the circuit is present in only one of the side walls 2.

Advantageously, though not in a limiting manner, the battery pack 1 further comprises a *busbar* 16. The *busbar* 16 also comprises inner surfaces SI, on which the coating layer 17 can be (is) at least partially arranged. In this way, the *busbar* 16 is electrically insulated along a large part of its path inside the battery pack 1, while dissipating, at the same time, part of the heat produced by the current flowing through it.

Advantageously, though not necessarily, the *busbar* 16 has an oblong shape and runs along the entire length of the battery pack 1, namely the *busbar* 16 runs along the entire length of the side wall 2.

In the embodiment shown in figure 2, the *busbar* 16 is coated with the coating layer 17 in three separate portions. The coated portions are electrically charged areas that are not configured to conduct electricity in the battery pack. Basically, the uncoated portions preferably are those that deal with the electrical connections between the cells 5.

In general, in other non-limiting embodiments, any inner surface SI comprised in the inner portion PI, which is delimited by the box-shaped portion PS of the battery pack 1, which needs to be electrically insulated and, at the same time, from which heat has to be dissipated, can be coated with the coating layer 17.

More generally, any surface SI inside the inner portion PI of the battery pack 1 can be coated with the coating layer 17. In some non-limiting cases, the coating layer 17 totally coats the inner surface SI; in other cases, the coating layer 17 partially coats the inner surface SI; in other words, only some portions of the inner surface SI are coated by the coating layer 17.

According to a further aspect of the invention, at least one of the two terminals 9 comprises a coating layer 17, which is at least partially arranged in a coated area 20 of at least part of at least one of the two terminals 9 of the cell 5.

In particular, the terminals 9 are planar (preferably with a thickness of less than 3 mm), more in particular the coated area 20 is at least one flat surface.

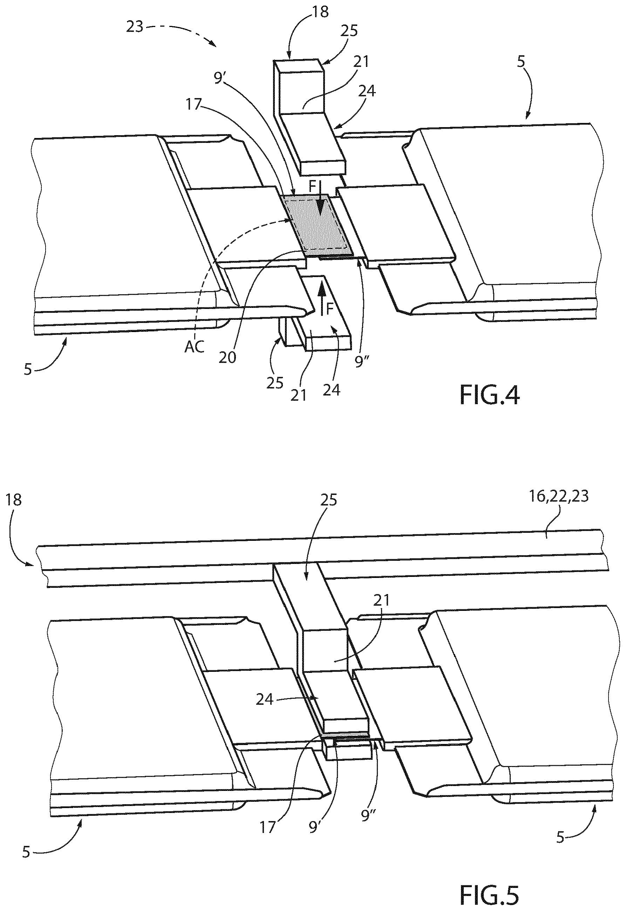

In particular, as shown in the non-limiting embodiments of figures 4 and 5, at least one of the two terminals 9 (9' and 9") comprises two main surfaces 19 and at least part of the coating layer 17 is arranged in the area of at least part of one of them.

The non-limiting embodiments of figures 4 and 5 show the connection between the electrical terminals 9' and 9" of two electrochemical cells 5 of the battery pack 1. In detail, each terminal 9' and 9" is provided with two main surfaces 19.

In these embodiments, the terminal 9' overlaps the terminal 9" so that they are electrically connected (in particular welded). Preferably, though not in a limiting manner, the terminal 9' is arranged so as to almost totally cover a main surface 19 of the terminal 9".

Preferably, the coating layer 17 is applied to the terminals 9 on the coated area 20, in the area of the surfaces 19 of the terminals 9 that are not used for electrical connections (in case the terminals 9 are connected by means of a butt joint, the coating layer could also be applied on both surfaces 19 of each terminal 9).

According to the non-limiting embodiments shown in figures 4 and 5, the coated area 20 occupies the entire main surface 19 of the terminal 9' that does not establish an electrical contact with the terminal 9". In addition, the coated area 20 occupies the entire main surface 19 of the terminal 9" that does not deal with an electrical contact with the terminal 9'.

Advantageously, though not in a limiting manner, the battery pack 1 comprises a cooling system 18 comprising, in turn, a first portion 24 arranged in contact with the coating layer 17 in a contact area AC particular included in the coated area 20. In other words, the coating layer is interposed, in contact, between the portion 24 of the cooling system 18 and the terminal 9, in the area of the coated area 20.

In particular, the cooling system 18 arranged on the contact area AC cools (namely, dissipates heat from) the terminals 9 of the cells 5.

In some non-limiting cases, like the ones shown in figures 4 and 5, the battery pack 1 comprises two cooling systems 18.

In figure 4, said systems 18 are shown while they are being arranged in the contact area AC according to the direction indicated by the arrows F, preferably perpendicularly to the surfaces 19.

Therefore, the cooling systems 18 are preferably arranged on the opposite sides of the two terminals 9' and 9" connected to one another.

In other non-limiting embodiments which are not shown herein, one single cooling system 18 is used, which is arranged on the main surface 19 of only one of the two terminals.

According to further embodiments, said single cooling system 18 used is arranged in contact with both the terminals 9' and 9" on two distinct contact areas AC.

Advantageously, though not in a limiting manner, the cooling system 18 comprises a dissipator element 21, in particular made of metal. The element 21 removes heat from at least one of the two terminals 9. The element 21 preferably removes heat from both terminals 9.

In particular, the dissipator element 21 comprises the portion 24 of the cooling system 18 arranged in contact with the coating layer 17. More in particular, the dissipator element 21 is a heat removal mass. In other words, the dissipator element 21 passively cools the terminals 9 of the cell 5.

According to some preferred embodiments, the dissipator element 21 comprises a second portion 25 opposite the portion 24 and configured to transfer heat from the portion 24 to a dissipation means 23.

In some non-limiting cases, the dissipation means 23 is air. In these cases, the dissipation element 21 is preferably provided with fins in order to maximise the dissipation.

In other non-limiting cases, the dissipation means 23 comprises a further dissipator element 22, in particular made of metal, comprised in the cooling system 18.

According to the non-limiting embodiment of figure 4, the cooling system 18 comprises the dissipator element 21, whose section is L-shaped. In other words, the dissipator element 21 is an angular plate; the angular plate comprises two rectangular plates, joined so as to form a right angle with one another.

In other non-limiting embodiments which are not shown herein, the dissipator element 21 has a different shape, for example a curved shape.

As previously mentioned and shown in figure 4, the two dissipator elements 21 are positioned, according to the direction F indicated by the arrows, on the opposite main surfaces 19 of the terminals 9' and 9" to dissipate heat.

In some non-limiting cases, the portion 24 of the dissipator element 21 is in contact with the coated area 20 on a contact area AC. On the other hand, its portion 25, opposite the portion 24, is free; namely, the portion 25 is not in contact with and/or is not connected to and/or is not supported by another element. In these cases, therefore, the portion 25 is configured to transfer heat from the portion 24 to the air. In other words, air is the dissipation means 23 through which heat is dissipated.

Therefore, in these cases, the upper portion 25 transfers heat from the terminals 9 to the air surrounding the terminals 9. Heat is preferably transferred to the air contained in the inner portion PI of the battery pack 1.

According to the non-limiting embodiment shown figure 5, the cooling system 18 comprises the dissipator element 21, whose section is L-shaped. In other words, though not in a limiting manner, the dissipator element 21 is a double angular plate, namely comprises three rectangular plates, arranged at right angles relative to one another. In particular, two plates are placed parallel to one another and are connected by an intermediate rectangular plate perpendicular to them. Preferably, though not in a limiting manner, the plates are connected so as to project from opposite sides of the intermediate plate at its respective opposite ends.

The cooling system 18 comprises the further dissipator element 22, which, in the embodiment shown herein, comprises the *busbar* 16.

In some preferred non-limiting cases, the dissipator element 21 supports the *busbar* 16. In other words, the dissipator element 21 supports the *busbar* 16, thus acting as support through its portion 25.

In particular, the portion 25 establishes a contact with the *busbar* 16 so as to transfer heat from the terminal 9 to the *busbar* 16.

Advantageously, though not in a limiting manner, the contact area AC has a smaller extension than the coated area 20.

Preferably, as shown in figures 4 and 5, the contact area AC is centrally arranged in the coated area 20. In other words, the contact area AC occupies a central portion of the coated area 20 so that a frame of coated area 20 surrounds the perimeter of the contact area AC, namely the perimeter of the portion 24 of the dissipator element 21.

In other non-limiting embodiments which are not shown herein, the contact area AC is not centred in the coated area 20. In other words, the perimeter of the contact area AC is not surrounded by the coated area 20. On the contrary, in particular, at least part of the perimeter of the contact area AC coincides with the perimeter of the coated area 20.

In other non-limiting embodiments, when the coated area 20 totally covers the main surface 19 of the terminal 9, if the contact area AC is equal to the coated area 20, then it occupies the entire surface 19 of the terminal 9 as well.

In further possible embodiments, the dissipator element 21 comprised in the cooling system 18 has a shape other than an L-shape or an S-shape; in particular, the dissipator element 21 has any shape that is provided with the portion 24 for establishing a contact with the terminal 9 and with the portion 25 for dissipating heat through the dissipation means 23.

In other non-limiting embodiments which are not shown herein, the further dissipator element 22 is another conductive component of the battery pack 1.

Since, as stated above, the coating layer 17 interposed between the cooling system 18 and the terminal 9 is electrically insulating, there is no passage of electric charges between these components. Therefore, the use of the cooling system 18 does not generate an unwanted flow of current from the terminals 9 to other points of the cell 5.

In the embodiments shown herein, the cooling system 18 is a passive cooling system; in particular, the cooling system 18 comprises elements that passively dissipate heat. In other words, the system 18 does not actively act or react to the dissipation of heat. According to other embodiments, the cooling system 18 is active or comprises several elements, including further active and/or passive dissipation elements.

Preferably, though not in a limiting manner, the coating layer 17 has a thickness of less than 5, preferably 3 mm. In particular, the coating layer 17 has a thickness ranging from 0.02 mm to 3 mm, in particular from 0.1 mm to 1 mm.

Advantageously, though not necessarily, the coating layer 17 comprises a thickness that is variable between a first portion of the inner surface SI and a second portion of the inner surface SI different from the first portion; the variation in thickness between the first portion and the second portion is equal to or greater than 20% of the thickness of the coating layer 17, in particular equal to or greater than 50%.

Preferably, though not in a limiting manner, the thickness of the coating layer 17 is greater on angular portions of the inner surfaces SI; the angular portions, namely the corners and the edges of the components, are areas where hot spots, namely points of heat accumulation, or static electricity, in case of pouches containing the active elements of the cells 5, are concentrated.

Advantageously, though not in a limiting manner, the coating layer 17 has a greater thickness on the angular portions of both the main faces 6 and the secondary faces 7 of the cells 5 compared to the remaining portions of the cells 5.

Preferably, though not necessarily, on the angular portions of the *busbar* 16, the thickness of the coating layer 17 is greater than on the other different portions of the *busbar.*

In particular, on the angular portions of the tray 11, the thickness of the coating layer 17 is greater than on the other different portions of the tray 11.

In particular, not in a limiting manner, the difference in thickness is obtained by means of several overlapping coating layers 17 manufactured with the same technique, for example spraying or spreading (for example, by means of a brush or a spatula), or with different techniques, for example some layers 17 are manufactured through spraying and other layers 17, only for the areas with a greater desired thickness, are manufactured through spreading.

Advantageously, though not in a limiting manner, the coating layer 17 has a thickness that is variable between the contact area AC and a portion of the coated area 20 other than the contact area AC. The variation in thickness between the contact area AC and the portion of the coated area 20 other than the contact area AC is equal to or greater than 20% of the thickness of the coating layer 17, in particular equal to or greater than 50%. In this way, the concentration of electrostatic charges on too close surfaces is prevented from generating electrical bridges.

Advantageously, though not in a limiting manner, the coating layer 17 has a thickness that is variable between the contact area AC and the frame of coated area 20 surrounding the contact area AC.

In other non-limiting embodiments which are not shown herein, any portion of the coated area 20 other than the contact area AC has a different thickness than the contact area AC as a function of the layout of the terminal 9 or of the cooling system 18.

In some non-limiting cases, the thickness in the area of the terminals 9 is greater compared to the other coated inner surfaces SI of the battery pack 1.

Advantageously, though not in a limiting manner, the greater the thickness of the coating layer 17, the more heat must be dissipated or the more insulating the coating layer 17 must be.

In other words, the coating layer 17 with a greater thickness is arranged on the hottest spots of the cell 5 or on those areas with a greater concentration of electrostatic charges, namely on the angular and peripheral portions of its main faces 6, of the secondary faces 7 and of the base surfaces 8 as well as on the electrical terminals 9.

The thickness of the coating layer 17 preferably has a greater thickness in the coated area 20 of the terminals 9 surrounding the contact area AC of the dissipator element 21.

According to some preferred, though non-limiting embodiments, the electrically insulating and thermally conductive coating layer 17 comprises one or more layers of paint, which comprises (is based on) boron nitride. In other words, the paint comprises boron nitride in its chemical formulation at least in part (the remaining part is a solvent, part of the solution in which the boron nitride is soluble).

Advantageously, though not necessarily, a spray gun, in particular an air-pressurized spray gun, is used to deposit the coating layer 17. This method is quick and allows users to obtain even and thin layers. The use of a spray gun is particularly advantageous when large areas have to be covered; this is the case when the body of the cell 5 or of the trays 11 must be covered.

As far as the areas with a thickness variation are concerned, advantageously, though not necessarily, the coating layer 17 is deposited with a brush. Alternatively, another type of applicator with or without bristles is used, for example a roller with a size suitable for the area to be covered.

The coating layer depositing methods discussed above are advantageously used in combination with one another to obtain thickness variations in the hot or electrostatic points of the battery pack 1.

The paint is preferably applied, at first, with a spray gun and, subsequently, some areas are thickened using a brush. The two methods can also be used individually.

The application of paint is carried out manually or is automated. Automatic machines or robots (for example, anthropomorphic robots) are preferably used to automate the application.

As already mentioned, the layer 17 can consist of one or more layers of paint. If an entire surface must dissipate a lot of heat or be particularly insulating, repeated applications can be carried out with a spray gun to obtain a coating 17 consisting of several layers of paint with a constant final thickness.

According to a further aspect of the invention, there is provided a road vehicle comprising a battery pack 1 of the type described so far.

Even though the invention described above specifically relates to some precise embodiments, it should not be considered as limited to said embodiments, for its scope of protection also includes all those variants, changes or simplifications covered by the appended claims, such as for example a different shape of the battery pack 1, a different shape of the electrochemical cells 5, a different layout of the dissipators, a different type of materials, etcetera.

The invention offers many advantages.

First of all, the invention provides an electrical insulation for components located in areas of the battery pack that are not configured for an electrical connection, without thermally insulating these areas.

Therefore, the invention optimizes the exchange of heat between the components of the battery pack and the liquid and/or air cooling system.

Therefore, the dissipation efficiency achieved by using one of the already known cooling systems always is higher than the efficiency obtained by using another known electrically insulating coating.

A further advantage of the invention lies in the possibility of directly collecting heat from and, thus, effectively cooling the terminals of the electrochemical cells, which are one of the most critical hot spots of the battery pack.

The invention also makes it possible to improve the overall cooling of the battery pack without adding a significant weight, the deposited layer being of atomic entities, in fact reducing the dimensions of currently used insulators.

Finally, thanks to the use of a paint, the invention allows the surfaces to be coated in a quick and also easily automated manner, reducing the manufacturing times of the battery packs, with evident economic advantages.

### LIST OF THE REFERENCE NUMBERS OF THE FIGURES

- 1: battery pack
- 2: side walls
- 3: base walls
- 4: lids
- 5: electrochemical cells
- 6: main faces
- 7: secondary faces
- 8: base surfaces
- 9: electrical terminal
- 10: layers
- 11: tray
- 12: main plate
- 13: projecting portions
- 14: seat
- 15: support
- 16: busbar
- 17: coating layer
- 18: cooling system
- 19: main surface
- 20: coated area
- 21: dissipator element
- 22: dissipator element
- 23: dissipation means
- 24: portion
- 25: portion
- PS: box-shaped portion
- F: direction
- AC: contact area
- PI: inner portion
- SI: inner surfaces
- SE: outer structure
- SL: side surface
- ED: dissipator elements

## Claims

1. A vehicular battery pack (1) comprising one or more electrochemical cells (5), each provided with two electrical terminals (9);
the battery pack (1) being **characterised in that** at least one of the two electrical terminals (9) comprises a coating layer (17), which is at least partially arranged in a coated area (20) of at least part of at least one of the two electrical terminals (9); and that the coating layer (17) comprises boron nitride.

2. The vehicular battery pack (1) according to claim 1, wherein at least one of the two electrical terminals (9) comprises two main surfaces (19) at at least part of one of which at least part of the coating layer (17) is disposed.

3. The vehicular battery pack (1) according to claim 1 or 2, comprising a cooling system (18) comprising in turn a first portion (24) arranged in contact with the coating layer (17) in a contact area (AC), in particular included in the coated area (20).

4. The vehicular battery pack (1) according to claim 3, wherein the cooling system (18) comprises a dissipator element (21), in particular metallic, configured to remove heat from at least one of the two electrical terminals (9), the dissipator element (21) comprising the first portion (24) .

5. The vehicular battery pack (1) in accordance with claim 4, wherein the dissipator element (21) comprises a second portion (25) opposite the first portion (24); the second portion (25) being configured to transfer heat from the first portion (24) to a dissipation means (23).

6. The vehicular battery pack according to claim 5, wherein the dissipation means (23) is air and/or the dissipation means (23) comprises a further dissipator element (22), in particular metallic, comprised in the cooling system (18).

7. The vehicular battery pack (1) according to claim 6, wherein the further dissipator element (22) comprises a busbar (16).

8. The vehicular battery pack (1) in accordance with claim 7, wherein the dissipator element (21) is configured to support the busbar (16).

9. The vehicular battery pack (1) in accordance with at least one of claims 3 to 8, wherein the contact area (AC) has an extension less than the coated area (20).

10. The vehicular battery pack (1) in accordance with claim 9, wherein the contact area (AC) is centrally arranged in the coated area (20).

11. The vehicular battery pack (1) in accordance with any of claims 3 to 10, wherein the coating layer (17) has a varying thickness between the contact area (AC) and a portion of the coated area (20) other than the contact area (AC); and wherein the variation in thickness between the contact area (AC) and the portion of the coated area (20) other than the contact area (AC) is equal to or greater than 20% of the thickness of the coating layer (17), in particular equal to or greater than 50%.

12. The vehicular battery pack (1) in accordance with any of claims 1 to 11, wherein the coating layer (17) comprises a thickness between 0.02 mm and 3 mm, in particular between 0.1 mm and 1 mm.

13. The vehicular battery pack (1) according to any of claims 1 to 12, wherein the coating layer (17) is configured to have a dielectric strength of 2.5 kV or more, in particular 5 kV, and a thermal conductivity of 400 W/mK or more, in particular 750 W/mK.

14. The vehicular battery pack (1) according to any of claims 1 to 13, wherein the coating layer (17) comprises one or more layers of paint.

15. A road vehicle comprising:
four wheels, of which at least one pair of driving wheels;
an electric or hybrid drive system configured to deliver power to the driving wheels;
the road vehicle being **characterised in that** the drive train comprises a vehicular battery pack (1) according to any one of claims 1 to 14.
